# EUROPEAN PATENT APPLICATION

(11) **EP 1 122 089 A2**
(43) Date of publication of application: **08.08.2001**
(21) Application number: 00308622.0
(22) Date of filing: 29.09.2000
(51) Int. Cl.: B42D 15/00, B32B 3/24

(54) **Document having identifying surface cavities**

(30) Priority: 03.02.2000 US 497287
(71) Applicant: Sonoco Development, Inc., Hartsville, South Carolina 29550 (US)
(72) Inventor: McArthur, Donald L., Pennellville, New York 13132 (US)
(74) Representative: Perkins, Sarah

(57) **Abstract**

A security structure is defined for providing a measure of security against counterfeiting of valuable documents and for conveying information tactilely to a user. In one embodiment, the security structure (10) is a laminate that includes a base layer (12) and two outer layers (14, 16) bonded to opposite faces of the base layer. Each outer layer includes a plurality of apertures (28, 30) arranged in a preselected pattern. Each aperture (28, 30), in conjunction with the portion of the base layer (12) adjacent that aperture(28, 30), defines a cavity (32). Each cavity and/or pattern of cavities are configured to convey information to a user through the user's sense of touch. A method of forming the laminate is also disclosed. The method includes bonding the two outer layers to the base layer and forming the apertures in the two sheets using a laser drill.

## Description

The present invention relates to security measures for deterring counterfeiting of valuable documents. The present invention also relates to structures for conveying information tactilely.

For almost as long as there have been documents of inherent value there have been attempts to counterfeit those documents. Security measures added to documents to deter counterfeiting have met with varying levels of success. United States currency, for example, have incorporated various security measures over the years. Among these are special ink and paper formulations, engraved patterns that interfere with photographic reproduction, "hidden" details within the engraved image, watermarks and strips of imprinted film embedded within the currency paper.

Each time a new security measure is implemented, counterfeiters are usually not far behind in their ability to counter those measure. For example, counterfeiters may employ skilled technicians who are able to closely copy special inks and paper. Counterfeiters may also use sophisticated photographic reproduction equipment and techniques to reproduce the intricate engravings, look of the paper and colors of the currency with great accuracy. New security features that make it more difficult and time consuming for counterfeiters to produce convincing copies of the valuable documents.

In addition, documents having inherent value are generally not suited for use by visually impaired persons. For example, United States currency does not have any indicia that allows a visually impaired person to determine the denomination of and/or other information about the currency in his possession. Although currency may be embossed with braille, such embossing can be done with relative ease and, thus, could be readily duplicated by counterfeiters.

The present invention comprises a security structure that include a sheet of material having a pair of faces spaced apart from one another, the distance between the faces defining the thickness of the sheet. The sheet includes at least one cavity formed in one of the faces of the sheet. The cavity has a depth less than the thickness of the sheet and is configured to convey information to the user through the user's sense of touch.

In another embodiment of the invention, the security structure comprises a base layer having first and second faces. A first outer layer is bonded to the first face of the base layer and has at least one aperture therein. The aperture and the portion of the first face of the base layer adjacent the aperture substantially define a first cavity configured to convey information to a user through the user's sense of touch.

The security structure may further include a second outer layer bonded to the second face of the base layer. The second outer layer may have at least one second aperture that, in conjunction with the second face of the base layer, substantially defines a second cavity configured to convey information to a user through the user's sense of touch.

Another aspect of the present invention is directed to a method of forming a security laminate. First, a sheet of material having first and second faces is provided. Then, at least one cavity is formed in one of the faces. The cavity is configured to convey information to a user through the user's sense of touch. The cavity may be formed by a laser drill.

In another embodiment of the method, a base layer and a first outer layer of material are provided. The base layer has first and second faces. At least one first aperture is formed in the first outer layer. The first outer layer is bonded to the first face of the base layer. The first aperture and the portion of the first face of the base layer adjacent the aperture substantially define a cavity configured to convey information to a user through the user's sense of touch. The base layer and the first outer layer may be bonded to one another before the first aperture is formed. The first aperture may be formed using a laser drill.

The method may further include the steps of providing a second outer layer and bonding it to the second face of the base layer. At least one second aperture may be formed in the second outer layer that, in conjunction with the portion of the second face of the base layer adjacent the aperture, substantially defines a second cavity configured to convey information to a user through the user's sense of touch.

For the purpose of illustrating the invention, the drawings show a form of the invention which is presently preferred. However, it should be understood that this invention is not limited to the precise arrangements and instrumentalities shown in the drawings.

Figure 1 is an exploded view illustrating a security structure according to the present invention.

Figure 2 is a plan view of the security structure shown in Figure 1.

Figure 3 is a sectional view of the security structure as taken along line 3-3 of Figure 2.

Figure 4 is a sectional view of the security structure as taken along line 4-4 of Figure 2.

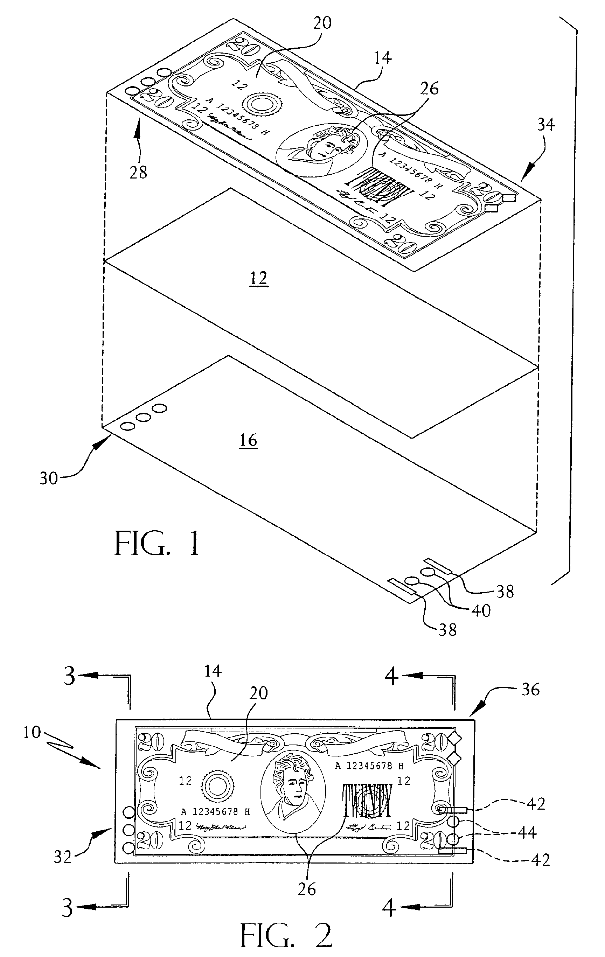

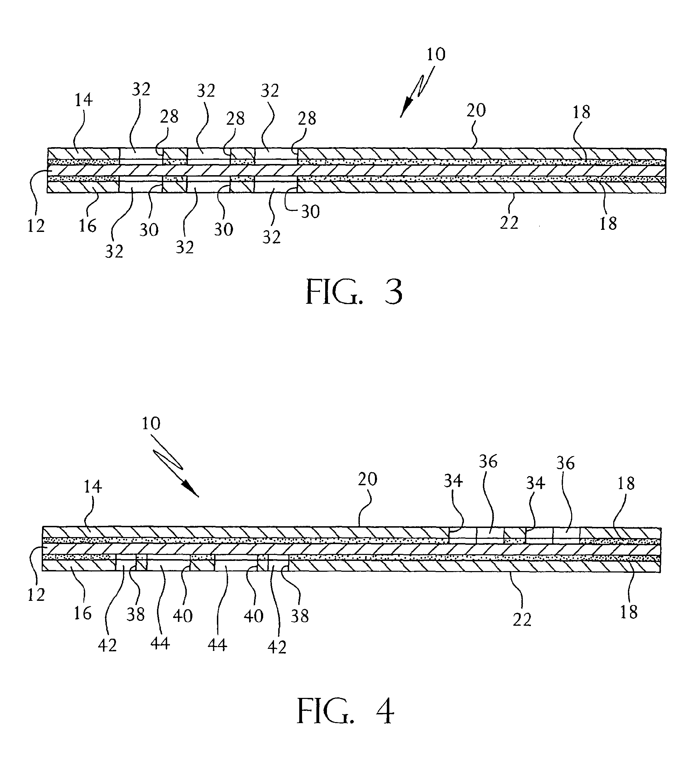

Referring to the drawings, wherein like numerals indicate like elements, Figure 1-4 illustrate a security structure, which is generally denoted by the numeral 10. The security structure 10 may be embodied in a piece of currency, such as the $20 United States Federal Reserve note shown in Figures 1-4. However the security structure of the present invention may be incorporated into any document having inherent value such as bank notes, stock certificates, negotiable instruments and the like.

The security structure 10 comprises a laminate having a base layer 12 and front and back outer layers 14, 16 bonded to opposite faces of the base layer 12 with a suitable adhesive 18. The front layer 14 defines a front face 20 of the security structure 10 and the back layer 16 defines a back face 22. Each of the outer layers 14, 16 has a plurality of apertures formed therein. Each aperture, in conjunction with the portion of the face of the base layer adjacent that aperture, generally defines a cavity in the security structure 10. The cavities make counterfeiting of the security structure more difficult and convey information about the security structure to a user through the user's sense of touch in order to facilitate identification of the denomination by visually impaired persons.

The base layer 12 is preferably made of a plastic, such as a polyester film. Most preferably, the base layer 12 is made of polyethylene terephthalate. However, other materials such as paper, metal foil, woven and non-woven fabrics or the like may be used.

The outer layers 14, 16 are preferably made of a material that can stand up to wear. For example, in the $20 bill embodiment illustrated in Figures 1-4, the outer layers 14, 16 are preferably made of paper similar to that presently used for United States currency. However, other materials such as those described above for the base layer 10 may be used. In addition to being wear layers, the outer layers 14, 16 provide surfaces for receiving printed indicia. In the embodiment shown, this indicia comprises conventional $20 bill markings, which are illustrated generally and are denoted by the numeral 26.

The outer layers 14, 16 are preferably bonded to the base layer 12 with an adhesive. Depending upon the method of forming the security structure, there may be adhesive on face of the base layer that is exposed by the aperture. In this case, each cavity would be defined by the respective aperture and the outer surface of the exposed adhesive. Preferably, however, exposed adhesive is not present in the cavities. If certain the types of materials are selected, such as plastic for each of the layers, the layers may be heat bonded or otherwise fused together.

Cavities having various shapes, sizes and locations and forming several patterns are shown. A lineal pattern of three like-sized circular apertures 28 is located in the lower left corner of the front layer 14 of the$20 bill. The same pattern of like-sized and shaped apertures 30 is located in the back layer 16 in registry with the like pattern in the front layer 14. These apertures 28, 30, in conjunction with the portions of the base layer adjacent the apertures 28, 30, define circular cavities 32 in the front and back faces 20, 22 of the security structure 10. Two rhombus-shaped apertures 34 in the front layer 14 adjacent the upper right corner of the security structure 10 are also provided. These apertures 34, in conjunction with the portions of the base layer adjacent the apertures 34, define two rhombus-shaped cavities 36 in the front face 20 of the security structure 10. In addition, a lineal pattern of two rectangular apertures 38 and two circular apertures 40 are provided in the back layer 16. These apertures 38, 40, respectively and in conjunction with the portions of the base layer adjacent the apertures 36, 38, define two rectangular cavities 42 and two circular cavities 44 in the back face 22 of the security structure 10.

Each cavity and/or pattern of cavities may be configured to convey information tactilely to a user. With currency, for example, this information preferably includes the bill's denomination but may also include information such as the bill's country of origin, printing date or the like. Each cavity may have a shape that is unique to the security structure or type of security structure. For example, a $20 may have all circular cavities at a predetermined location whereas a $5 bill may have all square cavities at the same location. The patterns may comprise braille or braille-like patterns of like-shaped cavities or, alternatively, may comprise cavities having different shapes and/or sizes.

The location of cavities on the security structure may also convey information to a user. For example, different denominations of currency, i.e. $1, $5, $10 etc., could have cavities, either like-configured or not, provided at different positions on the respective bills, so that a user could tell the denomination of the bill simply by the location of the cavities. The number of cavities may also tactilely convey information to a user. For example, different denominations of currency may have different number of cavities. The cavities shown in Figures 1-4 are generally located along the short edges of the security structure adjacent its corners. However, the cavities may be located on the security structure anywhere desired.

Although the security structure shown in Figures 1-4 comprises a three layer laminate, a security structure comprising a single sheet of material is contemplated. In this embodiment, the cavities, which would penetrate only partially through the sheet, would be formed in one of both faces of the sheet. The information conveying characteristics of the cavities would be the same as described above in respect to the three layer laminate. In addition, laminates having two layers wherein the cavities are defined by apertures in either of the two layers and the respective adjacent faces of the opposite layer are within the scope of the present invention. One skilled in the art will understand that the present invention also may be used with laminates comprising more than three layers.

Since it is contemplated that the security structure of the present invention may be incorporated into United States currency and other documents produced in large quantities, a manufacturing process that can meet a high volume demand is required. One such process comprises forming a continuous web of security structure onto which a plurality of documents are printed edge to edge across the width and along the length of the web. After the web forming process is completed, the web is cut into discrete documents at a cutting station.

In one embodiment, which is particularly suited for producing the three layer laminated illustrated in Figures 1-4, the web forming process includes front and back outer layer supplying stations, a base layer supplying station, a bonding station, a printing station and a cavity forming station. The outer layers and the base layer are supplied to the process from pre-rolled rolls of material. However, the process may be modified for the layers being supplied as discrete sheets rather than from rolls. One skilled in the art will understand the modifications necessary to accommodate the change in the character of the supply. Therefore, only the process for rolled material is described herein.

The front and back layers and the base layer are pulled from their respective supply rolls and through the bonding station where the front and back layers are bonded to opposite sides of the base layer. Depending on the type of bond, the bonding station may include a curing station and/or cooling station. After the laminate has been formed, it is moved through the printing station where both sides of the web are printed with an array of documents.

From the printing station, the laminate is moved through the cavity forming station wherein a cavity forming mean forms a plurality of cavities in both sides of the web in locations corresponding to the locations of the respective documents. The cavity forming means is preferably one or more lasers drills that are precisely controlled to form apertures in the covering sheets and leave the base layer intact. Other cavity forming means, such as one or more mechanical drill or cutting apparatus, a corona discharge unit or the like, may be used.

One skilled in the art will recognize that the above described process may be modified for producing a security structure comprising a single sheet of material or a laminate having two or four or more layers. In addition, one skilled in the art will recognize that an alternative embodiment of the web forming process may include forming the apertures in the front and back layers before they are bonded to the base layer. In this embodiment, the hole forming means may be any of those mentioned above or one or more hole punches or the like. In another embodiment, the hole forming means may be remote from the web forming process and the front and back layers supplied to the process from pre-rolled rolls of material or discrete sheets of material having pre-formed apertures therein.

Although the invention has been described and illustrated with respect to exemplary embodiments thereof, it should be understood by those skilled in the art that the foregoing and various other changes, omissions and additions may be made therein and thereto, without parting from the spirit and scope of the present invention.

## Claims

1. A document, comprising:
a sheet having a pair offaces spaced apart from one another, the distance between the faces defining the thickness of the sheet; and
at least one cavity formed in one of the faces, the cavity having a depth less than the thickness of the sheet and being configured to convey preselected information through a user's sense of touch.

2. The document of claim 1 wherein at least one face of the sheet has a plurality of cavities formed therein, the cavities being arranged in a pattern that conveys preselected information through the user's sense of touch.

3. The document of claim 1 wherein each face of the sheet has at least one cavity formed therein.

4. The document of claim 3 wherein the cavities on the two faces of the sheet are in registry with one another.

5. The document of claim 1 wherein the sheet comprises at least two layers attached to one another and two of the layers are outer layers, each cavity being generally defined by an aperture in one of the outer layers and a portion of the layer adjacent that outer layer.

6. The document of claim 1, 2, 3 or 4 wherein the sheet comprises two outer layers and a middle layer sandwiched between the outer layers, the middle layer having two spaced apart surfaces, each surface being attached to a corresponding outer layer, each cavity being generally defined by an aperture in one of the outer layers and a portion of the surface of the middle layer adjacent that aperture.

7. A document, comprising:
two outer layers;
a base layer sandwiched between the two outer layers and having a pair of spaced-apart faces, each face being attached to a corresponding outer layer; and
a plurality of cavities, each cavity generally defined by an aperture in one of the outer layers and a portion of the face of the base layer adjacent that outer layer, the cavities being configured to convey information through a user's sense of touch.

8. The document of claim 7 wherein the outer layers are made of paper.

9. The document of claim 7 wherein the base layer is made of plastic.

10. The document of claim 9 wherein the plastic is a polyester film.

11. The document of claim 10 wherein the polyester film is polyethylene teraphthalate.

12. A document having a front face and a back face, comprising:
a base layer having a first face and a second face;
a front layer bonded to the first face of the base layer;
a back layer bonded to the second face of the base layer;
a first plurality of cavities located on the front face of the security structure, at least some of the first plurality of cavities arranged in a first pattern, each cavity in the first plurality of cavities being generally defined by an aperture in the front layer and the portion of the first face of the base layer adjacent that cavity, the first pattern being preselected to convey information to a user through the user's sense of touch; and
a second plurality of cavities located on the back face of the security structure, at least some of the second plurality of cavities arranged in a second pattern, each cavity in the second plurality of cavities being generally defined by an aperture in the back layer and the portion of the second face of the base layer adjacent that cavity, the second pattern being preselected to convey information through a user's sense of touch.

13. A method of forming a document comprising the steps of:
providing a sheet having a pair of spaced-apart faces, the distance between the faces defining the thickness of the sheet;
forming at least one cavity in one of the faces, the cavity having a depth less than the thickness of the sheet and configured to convey preselected information through a user's sense of touch.

14. The method of claim 13 wherein the cavity is formed by a laser drill.

15. The method of claim 13 wherein a plurality of cavities forms a pattern, the pattern being preselected to convey information through a user's sense of touch.

16. The method of claim 13 wherein the sheet comprises at least two layers bonded to one another and two of the layers are outer layers, each cavity being generally defined by an aperture located in one of the outer layers and a portion of the layer adjacent that outer layer.

17. The method of claim 13 wherein the sheet comprises two outer layers and a middle layer sandwiched between the outer layers, the middle layer having two spaced apart surfaces, each surface being attached to a corresponding outer layer, each cavity being generally defined by an aperture in one of the outer layers and a portion of the surface of the middle layer adjacent that aperture.
